# EUROPÄISCHE PATENTSCHRIFT

(11) **EP 4 380 784 B1**
(45) Veröffentlichungstag und Bekanntmachung des Hinweises auf die Patenterteilung: **29.10.2025**
(21) Anmeldenummer: 22790295.4
(22) Anmeldetag: 20.09.2022
(51) Int. Cl.: B29C 65/08, B29K 705/02, B29L 31/00

(54) **VORRICHTUNG ZUM ULTRASCHALLVERSCHWEISSEN VON VERBUNDMATERIAL**
DEVICE FOR THE ULTRASONIC WELDING OF COMPOSITE MATERIAL
DISPOSITIF DE SOUDAGE PAR ULTRASONS DE MATÉRIAU COMPOSITE

(30) Priorität: 22.09.2021 DE 102021124530
(43) Veröffentlichungstag der Anmeldung: 12.06.2024
(73) Patentinhaber: SIG Services AG, 8212 Neuhausen am Rheinfall (CH)
(72) Erfinder: BREITMAR, Felix, 41063 Mönchengladbach (DE); HOSE, Thomas, 45711 Datteln (DE); ZENDLER, Stefan, 75334 Straubenhardt (DE)
(74) Vertreter: Cohausz & Florack
(86) Internationale Anmeldenummer: PCT/EP2022/075996
(87) Internationale Veröffentlichungsnummer: WO 2023/046644

(56) Entgegenhaltungen:
- EP-B1- 1 854 618
- EP-B1- 3 092 995
- US-A1- 2015 274 337
- US-B1- 6 251 203

## Beschreibung

Die Erfindung betrifft eine Vorrichtung zum Ultraschallverschweißen von Verbundmaterial, insbesondere Verbundmaterial von Packungsmänteln und/oder Verpackungen, umfassend: wenigstens zwei Werkzeuge zur Ultraschallverschweißung, insbesondere eine Sonotrode und einen Amboss, wobei jedes Werkzeug eine Funktionsfläche zum Kontakt mit dem zu verschweißenden Material aufweist, wobei die Funktionsflächen der Werkzeuge etwa parallel zueinander ausgerichtet sind, so dass zwischen den Funktionsflächen ein Spalt mit einer vorzugsweise etwa waagerechten Nahtrichtung entsteht, wobei die Werkzeuge derart gelagert sind, dass die Breite des Spaltes veränderbar ist, indem wenigstens eines der Werkzeuge entlang einer Vorschubrichtung bewegbar ist, und wenigstens ein Gelenk mit wenigstens einer Drehachse, um die eines der Werkzeuge drehbar ist.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entstehen. Diese Herstellungsart hat unter anderem den Vorteil, dass die Zuschnitte sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff und/oder Metall, insbesondere Aluminium. Derartige Verpackungen finden insbesondere in der Lebensmittelindustrie große Verbreitung.

Auf dem Gebiet der Verpackungstechnik sind zahlreiche Vorrichtungen und Verfahren bekannt, mit denen flach zusammengefaltete Packungsmäntel aufgefaltet, einseitig verschlossen, mit Inhalten befüllt und anschließend vollständig verschlossen werden können.

Eine besondere Herausforderung stellt das Verschließen der Packungsmäntel dar, weil durch das Verschließen eine zuverlässige Abdichtung der Packungsmäntel erreicht werden muss, die auch dem anschließenden Transport und anderen Belastungen standhalten muss. Eine Möglichkeit des Verschließens von Packungsmänteln besteht darin, die Nähte des Packungsmantels zu verschweißen. Dies kann beispielsweise durch Ultraschall-Schweißverfahren erfolgen. Bei einem Ultraschall-Schweißverfahren werden zwei zusammenwirkende Werkzeuge - eine Sonotrode und ein Amboss - derart angeordnet, dass zwischen den Wirkbereichen dieser Werkzeuge ein schmaler Spalt entsteht. Die Packungsmäntel können nun mit ihrem zu verschweißenden Bereich in den Spalt geführt werden und dort verschweißt werden.

Der Schweißvorgang erfolgt, indem die Sonotrode ihre Ultraschallschwingungen auf den zu verschweißenden Bereich des Packungsmantels überträgt (üblicher Frequenzbereich von Ultraschallschwingungen: 20kHz bis 10GHz). Hierzu ist eine von Aufbau und Stärke des zu verschweißenden Materials sowie den Kontaktzonen an Amboss und Sonotrode und der eingestellten Frequenz abhängige, bestimmte Anpresskraft erforderlich. Die auf diese Weise in den Packungsmantel eingebrachte Energie führt zu einer Aufschmelzung und Verklebung ("Verschweißung") der inneren Materiallage, bei der es sich häufig um eine Lage aus thermoplastischem Kunststoff handelt.

Es kann unterschieden werden zwischen kontinuierlichen und diskontinuierlichen - also taktweisen - Ultraschall-Schweißverfahren und den hierfür bekannten Schweißvorrichtungen.

Bei den kontinuierlichen Ultraschall-Schweißverfahren werden die Sonotrode und der Amboss häufig als gegenläufig rotierende Werkzeuge ausgeführt, zwischen denen ein schmaler Spalt entsteht, durch welchen die Packungsmäntel mit ihrem zu verschweißenden Bereich kontinuierlich hindurchgeführt werden. Wegen der rotierenden bzw. rollenden Bewegung der Werkzeuge (Sonotrode, Amboss) werden derartige Ultraschall-Schweißverfahren auch als Rollennahtschweißverfahren bezeichnet. Kontinuierliche Ultraschall-Schweißverfahren sind beispielsweise aus der DE 295 10 274 U1 oder der DE 10 2013 100 474 A1 bekannt.

Derartige kontinuierliche Ultraschall-Schweißverfahren haben aufgrund der rotierenden Werkzeuge den Vorteil, dass eine kontinuierliche Verschweißung erfolgen kann. Das zu verschweißende Material kann also unterbrechungsfrei durch die Ultraschallschweißanlage geführt werden. Zudem kann bei vielen der bekannten Vorrichtungen die Spaltbreite zwischen den Werkzeugen aktiv - also durch den Benutzer der Anlage - verstellt werden und somit an die Stärke der zu verschweißenden Materialien angepasst werden.

Ein Nachteil derartiger kontinuierlicher Vorrichtungen und Verfahren liegt jedoch darin, dass eine passive - also durch das zu verschweißende Material ausgelöste - Anpassung der Spaltbreite während des Schweißvorgangs gar nicht oder nur in unbefriedigender Weise möglich ist. Eine Veränderung der Spaltbreite während des Schweißvorgangs kann beispielsweise notwendig sein, wenn mehrere zu verschweißende Materialien nicht nahtlos aneinander gereiht, sondern voneinander beabstandet durch den Spalt geführt werden. Dies kann beispielsweise bei Packungsmänteln der Fall sein, die von einem Transportband fortbewegt werden. Eine Veränderung der Spaltbreite kann auch notwendig sein, wenn sich die Materialstärke der zu verschweißenden Materialen ändert. Auch dies kann bei Packungsmänteln auftreten, beispielsweise in dem Bereich von überlappenden Materiallagen.

Bei den diskontinuierlichen (auch: "taktweisen") Ultraschall-Schweißverfahren sind die Sonotrode und der Amboss häufig derart gelagert, dass sie zusammengepresst und auseinandergezogen werden können, wobei sich die Größe des zwischen den beiden Werkzeugen entstehenden Spaltes verändert. Im geöffneten Zustand können die zu verschweißenden Materialien in den Spalt eingeführt werden. Wenn die gewünschte Position erreicht ist, wird die Spaltbreite verringert, indem die Sonotrode und der Amboss zusammengepresst werden, so dass der Schweißvorgang beginnen kann. Nach abgeschlossenem Schweißvorgang wird die Spaltbreite wieder vergrößert, so dass die verschweißten Materialien aus dem Spalt entnommen werden können. Dieser Ablauf wiederholt sich häufig in zeitlich gleicher Abfolge und Dauer, weshalb von einem "taktweisen" Betrieb gesprochen wird.

Ein Vorteil derartiger diskontinuierlicher Ultraschall-Schweißverfahren liegt darin, dass sich viele wichtige Prozessparameter (z.B. Höhe und Verteilung des Anpressdrucks) präziser einstellen lassen als bei einem der zuvor beschriebenen kontinuierlichen Ultraschall-Schweißverfahren. Zudem ist es möglich, die Sonotrode und dem Amboss sehr genau an die zu verschweißenden Materialen anzupassen und beispielsweise auch Materialien zu verschweißen, die in unterschiedlichen Bereichen unterschiedliche Materialstärken aufweisen, beispielsweise Packungsmäntel mit bereichsweise überlappenden Materiallagen (z.B. im Bereich einer bereits zuvor verschweißten Naht). Die Anpassung der Werkzeuge ist möglich, da jeder Bereich der Werkzeuge einem definierten Bereich des zu verschweißenden Materials bzw. der zu erzeugenden Schweißnaht zugeordnet ist und nicht die gesamte Schweißnaht durch abrollende - in Umfangsrichtung gleichbleibende - Werkzeuge erzeugt werden.

Eine Herausforderung bei diskontinuierlichen Ultraschall-Schweißverfahren liegt jedoch darin, eine homogene Druckverteilung auch dann zu erreichen, wenn es zu einer Deflektion bzw. Durchbiegung der Schweißwerkzeuge kommt. Die Ursache der Deflektion kann beispielsweise darin liegen, dass sich der Amboss oder die Sonotrode bzw. deren Aufhängungen bzw. Träger unter der Last der Schweißkräfte verbiegen. Um auf derartige Veränderungen reagieren zu können, sollten die Funktionsflächen der Werkzeuge in der Lage sein, auf die Veränderung zu reagieren und ebenfalls Position und/oder Ausrichtung anzupassen.

Hierzu sind bereits unterschiedliche Lösungsversuche bekannt, beispielsweise aus der EP 1 854 618 B1. Bei der dort gezeigten Vorrichtung zum Ultraschallschweißen ist der Amboss an einem aus zwei Hebeln gebildetem Parallelhebel gelagert und kann in Richtung der Sonotrode und zurück bewegt werden, wobei die Funktionsflächen beider Werkzeuge parallel bleiben. Zudem kann der Amboss um eine vertikale Achse verdreht werden. Auch diese Art der Lagerung des Amboss erlaubt jedoch nur eine eingeschränkte Beweglichkeit, nämlich eine Translationsbewegung entlang einer - nicht veränderbaren - Achse und eine Rotationsbewegung um eine - nicht veränderbare - Achse.

Das Dokument US 2015/274337 A1 offenbart eine weitere Ultraschall-Schweißeinrichtung. Aus dem Dokument US 6,251,203 B1 sind eine Vorrichtung und ein Verfahren zum Zusammenbau einen Kunststoffbehälters für Nahrungsmittel bekannt. Das Dokument EP 3 092 995 B1 beschreibt eine Ultraschall-Schweißvorrichtung und ein Ultraschall-Schweißverfahren für bahnförmige Elemente.

Vor diesem Hintergrund liegt der Erfindung die Aufgabe zugrunde, eine eingangs beschriebene und zuvor näher erläuterte Vorrichtung derart auszugestalten und weiterzubilden, dass die Werkzeuge und ihre Funktionsflächen flexibel auf dynamische Veränderungen während des Schweißvorgangs reagieren können, um die Druckverteilung und damit den Energieeintrag entlang der Schweißnaht konstant zu halten und so ein gutes Schweißergebnis zu erreichen.

Diese Aufgabe wird bei einer Vorrichtung nach dem Oberbegriff von Patentanspruch 1 dadurch gelöst, dass die Lage der Drehachse veränderbar ist.

Es handelt sich bei der erfindungsgemäßen Vorrichtung um eine Vorrichtung zum Ultraschallverschweißen von Verbundmaterial, insbesondere Verbundmaterial von Packungsmänteln und/oder Verpackungen. Die Vorrichtung zeichnet sich zunächst durch wenigstens zwei Werkzeuge zur Ultraschallverschweißung aus, insbesondere durch eine Sonotrode und durch einen Amboss. Indem zwei oder mehr Werkzeuge vorgesehen sind, können die zu verschweißenden Materialien gleichzeitig von mehreren Seiten bearbeitet werden, ohne hierfür gewendet werden zu müssen. Jedes Werkzeug weist eine Funktionsfläche zum Kontakt mit dem zu verschweißenden Material auf.

Unter der Funktionsfläche wird diejenige Fläche verstanden, die auf die Packungsmäntel und/oder Verpackungen einwirkt. Die Einwirkung der Funktionsflächen auf den Packungsmantel bzw. die Verpackung kann beispielsweise berührend (z.B. durch Druck) erfolgen. Die Funktionsflächen der Werkzeuge sind etwa parallel zueinander ausgerichtet, so dass zwischen den Funktionsflächen ein Spalt mit einer vorzugsweise etwa waagerechten Nahtrichtung entsteht. Dies ermöglicht es, etwa waagerecht verlaufende (Schweiß-)Nähte zu erzeugen, beispielsweise zum Verschließen des Giebelbereichs von Verpackungen. Die Werkzeuge sind derart gelagert, dass die Breite des Spaltes veränderbar ist, indem wenigstens eines der Werkzeuge entlang einer Vorschubrichtung bewegbar ist. Unter der Vorschubrichtung wird diejenige Richtung verstanden, entlang der das Werkzeug bewegt werden kann, um den Spalt zu verkleinern und zu vergrößern. Hiermit kann insbesondere eine "aktive" - also durch den Benutzer der Vorrichtung veranlasste - Verstellung des Spaltes gemeint sein. Diese Verstellung erfolgt üblicherweise bei Stillstand der Vorrichtung, beispielsweise bei einem Wechsel des zu verschweißenden Materials. Wenn beide Werkzeuge zusammengepresst werden, wird die Spaltbreite durch die Stärke des zwischen den Werkzeugen angeordneten, zu verschweißenden Verbundmaterials bestimmt. Die Vorrichtung weist zudem wenigstens ein Gelenk mit wenigstens einer Drehachse auf, um die eines der Werkzeuge drehbar ist. Durch diese drehbare Lagerung wird eine "passive" - also eine durch das zu bearbeitende Material veranlasste - Anpassung bzw. Verstellung des Werkzeugs ermöglicht.

Die erfindungsgemäße Vorrichtung zeichnet sich dadurch aus, dass die Lage der Drehachse veränderbar ist. Durch eine Veränderung der Lage der Drehachse kann die Vorrichtung und insbesondere das beweglich gelagerte Werkzeug - beispielsweise die Sonotrode - optimal auf die zu verschweißenden Materialien und deren Größe eingestellt werden. Die Verstellbarkeit kann beispielsweise dadurch erreicht werden, dass das Gelenk relativ zu der übrigen Vorrichtung verschoben werden kann und in unterschiedlichen Stellungen fixiert werden kann. Beabsichtigt ist daher vor allem eine Verstellbarkeit des Gelenks und somit eine Veränderbarkeit der Lage der Drehachse vor und/oder nach dem Schweißvorgang, nicht während des Schweißvorgangs; es soll also eine Voreinstellung möglich sein. Eine Veränderbarkeit der Lage der Drehachse kann auch dazu genutzt werden, die Lage des Momentanpols des beweglich gelagerten Werkzeug - beispielsweise die Sonotrode - zu verändern. Die Verstellung der Lage der Drehachse kann beispielsweise mit dem Ziel erfolgen, ein mechanisches Gleichgewicht, insbesondere ein Momentengleichgewicht zu erreichen, durch welches das beweglich gelagerte Werkzeug in einem Gleichgewichtszustand betrieben werden kann, der dafür sorgt, dass der Schweißdruck entlang der Naht konstant ist.

Nach einer Ausgestaltung der Vorrichtung ist vorgesehen, dass die Drehachse orthogonal zur Vorschubrichtung und/oder orthogonal zur Nahtrichtung verläuft. Die Nahtrichtung verläuft häufig (jedoch nicht zwingend) etwa waagerecht und die Vorschubrichtung verläuft entweder ebenfalls waagerecht oder gegenüber einer waagerechten Ebene leicht geneigt. Dies hat zur Folge, dass die Drehachse entweder senkrecht (bei waagerechter Vorschubrichtung) oder gegenüber einer senkrechten Ebene leicht geneigt verläuft (bei geneigter Vorschubrichtung). Bei einer etwa senkrecht verlaufenden Drehachse wird erreicht, dass das beweglich gelagerte Werkzeug, beispielsweise die Sonotrode (abschnittsweise) entlang einer im Wesentlichen waagerechten Kreisbahn beweget werden kann. Dies hat zur Folge, dass die Sonotrode bei einer (Dreh-)Bewegung ihre Höhe kaum verändert, so dass Schweißnähte mit konstanter Höhe erzeugt werden können. Gleichwohl kann es erforderlich sein, die Vorschubrichtung leicht (gegenüber der Waagerechten) zu neigen, so dass auch die Drehachse leicht (gegenüber der Senkrechten) geneigt ist. Durch die Neigung der Vorrichtung kann insbesondere sichergestellt sein, dass die Verpackungen kollisionsfrei in die Vorrichtung und wieder aus der Vorrichtung hinaus geführt werden können. Zudem kann eine Neigung der Vorrichtung bei Verpackungen mit schräg ansteigendem Giebel und/oder mit Schraubverschluss vorteilhaft sein.

Erfindungsgemäß ist vorgesehen, dass die Lage der Drehachse entlang der Nahtrichtung verschiebbar ist. Durch eine Verschiebung der Drehachse entlang der Nahtrichtung kann die Vorrichtung und insbesondere das beweglich gelagerte Werkzeug - beispielsweise die Sonotrode - optimal auf die Form und Länge der Naht eingestellt werden. Die Verschiebbarkeit wird erfindungsgemäß dadurch erreicht, dass das Gelenk relativ zu der übrigen Vorrichtung verschoben werden kann und in unterschiedlichen Stellungen arretiert werden kann. Erreicht werden soll vor allem eine Verschiebbarkeit der Lage der Drehachse vor und/oder nach dem Schweißvorgang, nicht während des Schweißvorgangs; es soll also eine Voreinstellung möglich sein. Wie bereits zuvor beschrieben wurde, kann durch eine Verschiebung der Drehachse die Lage des Momentanpols des beweglich gelagerten Werkzeugs - beispielsweise der Sonotrode - verändert werden. Zudem kann ein mechanisches Gleichgewicht, insbesondere ein Momentengleichgewicht erreicht werden, durch welches das beweglich gelagerte Werkzeug in einem Gleichgewichtszustand betrieben werden kann, der dafür sorgt, dass der Schweißdruck entlang der Naht konstant ist.

Nach einer weiteren Ausbildung der Vorrichtung ist vorgesehen, dass der Abstand zwischen der Drehachse und dem Spalt weniger als 50 cm, insbesondere weniger als 10 cm, vorzugsweise weniger als 5 cm beträgt. Der Abstand zwischen der Drehachse und dem Spalt hat einen Einfluss auf die Art der Bewegung des Werkzeugs - beispielsweise der Sonotrode - im Bereich des Spaltes. Je größer der Abstand ist, desto größer ist der Anteil der translatorischen Bewegungskomponente und desto geringer ist der Anteil der rotatorischen Bewegungskomponente. Die Möglichkeit einer Rotation ist häufig erwünscht, um einen Winkelausgleich zu ermöglichen; eine translatorische Verschiebung im Bereich der Naht ist hingegen eher unerwünscht, da sie die Qualität der Verschweißung beeinträchtigen kann. Durch die angegebenen Höchstabstände wird sichergestellt, dass die translatorische Verschiebung im Bereich der Naht auf ein akzeptables Maß beschränkt wird.

Nach einer weiteren Ausgestaltung der Vorrichtung ist vorgesehen, dass das Gelenk ein Scharniergelenk aufweist. Durch ein Scharniergelenk bzw. Drehgelenk wird eine Drehbewegung um eine Drehachse ermöglicht, es erlaubt daher einen Freiheitsgrad der Bewegung. Das Gelenk kann entweder nur ein Scharniergelenk aufweisen - also aus einem Scharniergelenk bestehen - oder mehrere Scharniergelenke aufweisen.

Gemäß einer weiteren Ausgestaltung der Vorrichtung ist vorgesehen, dass das Gelenk ein Festkörpergelenk, insbesondere eine Blattfeder aufweist. Ein Festkörpergelenk bezeichnet ein Gelenk, bei dem die Beweglichkeit dadurch erreicht wird, dass ein bestimmter Bereich des Gelenks eine verringerte Biegesteifigkeit aufweist und elastisch verformt werden kann ("Drehung durch Biegung"). Die verringerte Biegesteifigkeit kann beispielsweise durch eine lokale Verringerung der Querschnittsfläche erreicht werden. Festkörpergelenke zeichnen sich durch eine einfache und robuste Bauweise aus und haben zudem den Vorteil, schmiermittelfrei und somit wartungsfrei betrieben werden zu können. Festkörpergelenke haben häufig nur einen eingeschränkten Drehwinkelbereich, dies ist jedoch bei einigen Anwendungen - wie etwa der Lagerung einer Sonotrode - ausreichend. Eine Bauart eines derartige Festkörpergelenks ist eine Blattfeder. Blattfedern haben neben den zuvor genannten Vorteilen die nützliche Eigenschaft, dass sie bei einer Auslenkung der Auslenkungsrichtung entgegengerichtete Rückstellkräfte erzeugen, die die Blattfeder wieder in die nicht ausgelenkte Ausgangsstellung zurückbewegt. Das Gelenk kann entweder nur ein Festkörpergelenk aufweisen - also aus einem Festkörpergelenk bestehen - oder mehrere Festkörpergelenke aufweisen.

Nach einer weiteren Ausgestaltung der Vorrichtung ist vorgesehen, dass die Gelenke ein mehrgliedriges Getriebe bilden. Durch mehrgliedrige Getriebe, also Getriebe mit mehreren miteinander gekoppelten Gliedern, lassen sich durch die Überlagerung mehrere (Einzel-)Bewegungsbahnen besonders komplexe (Gesamt-)Bewegungsbahnen ausführen. Zudem lässt sich die Lage des Momentanpols sehr flexibel einstellen, insbesondere muss der Momentanpol nicht auf einer der Drehachsen der einzelnen Gelenke liegen. Zu dieser Ausgestaltung wird weiter vorgeschlagen, dass Getriebe mehrere Festkörpergelenke, insbesondere mehrere Blattfedern aufweist. Indem ein mehrgliedriges Getriebe aus mehreren Festkörpergelenken, insbesondere aus mehreren Blattfedern gebildet, wird, lassen sich die zuvor genannten Vorteile von mehrgliedrigen Getrieben (komplexe Bewegungsbahnen) mit den zuvor genannten Vorteilen von Blattfedern (einfach, robust, schmiermittelfrei) kombinieren.

Nach einer weiteren Ausgestaltung der Vorrichtung ist vorgesehen, dass das um das Gelenk drehbar gelagerte Werkzeug einen Momentanpol aufweist, dessen Abstand zu dem Spalt weniger als 10 cm, insbesondere weniger als 5 cm, vorzugsweise weniger als 1 cm beträgt. Der Abstand zwischen dem Momentanpol des Werkzeugs und dem Spalt hat einen Einfluss auf die Art der Bewegung des Werkzeugs - beispielsweise der Sonotrode - im Bereich des Spaltes. Je größer der Abstand ist, desto größer ist der Anteil der translatorischen Bewegungskomponente und desto geringer ist der Anteil der rotatorischen Bewegungskomponente. Die Möglichkeit einer Rotation ist häufig erwünscht, um einen Winkelausgleich zu ermöglichen; eine translatorische Verschiebung (also z.B. eine Relativbewegung der Sonotrode zu Amboss und Verbundmaterial oder des Amboss zu Sonotrode und Verbundmaterial) im Bereich der Naht ist hingegen eher unerwünscht, da sie die Qualität der Verschweißung beeinträchtigen kann. Durch die angegebenen Höchstabstände wird sichergestellt, dass die translatorische Verschiebung im Bereich der Naht auf ein akzeptables Maß beschränkt wird. Je näher der Momentanpol an der Schweißnaht liegt, desto besser funktioniert der selbsttätige Ausgleich, weil er weniger durch Reibung behindert wird.

Gemäß einer weiteren Ausgestaltung der Vorrichtung ist schließlich vorgesehen, dass das um das Gelenk drehbar gelagerte Werkzeug einen Momentanpol aufweist, dessen Abstand zu dem Spalt geringer ist als der Abstand zwischen der Drehachse und dem Spalt. Ein besonders nah an dem Spalt liegender Momentanpol lässt sich insbesondere dadurch erreichen, dass das Werkzeug eine Lagerung aufweist, bei der der Momentanpol nicht durch eine der Drehachsen der Gelenke verläuft, sondern daneben liegt. Auf diese Weise - also durch das Auseinanderfallen von Momentanpol und Drehachse - kann der Momentanpol noch dichter an dem Spalt angeordnet werden, als die Gelenke angeordnet werden können.

Die Erfindung wird nachfolgend anhand einer lediglich ein bevorzugtes Ausführungsbeispiel darstellenden Zeichnung näher erläutert. **In** der Zeichnung zeigen:
- Fig. 1A: eine erste Ausgestaltung einer erfindungsgemäßen Vorrichtung in perspektivischer Ansicht,
- Fig. 1B:: die Vorrichtung aus Fig. 1A in Seitenansicht,
- Fig. 1C:: die Vorrichtung aus Fig. 1A in einer Draufsicht aus der in Fig. 1B gezeigten Blickrichtung IC,
- Fig. 2A:: eine zweite Ausgestaltung einer erfindungsgemäßen Vorrichtung in perspektivischer Ansicht,
- Fig. 2B:: die Vorrichtung aus Fig. 2A in Seitenansicht,
- Fig. 2C:: die Vorrichtung aus Fig. 2A in einer Draufsicht aus der in Fig. 2B gezeigten Blickrichtung IIC,
- Fig. 3A:: eine dritte Ausgestaltung einer erfindungsgemäßen Vorrichtung in perspektivischer Ansicht,
- Fig. 3B:: die Vorrichtung aus Fig. 3A in Seitenansicht, und
- Fig. 3C:: die Vorrichtung aus Fig. 3A in einer Draufsicht aus der in Fig. 3B gezeigten Blickrichtung IIIC.

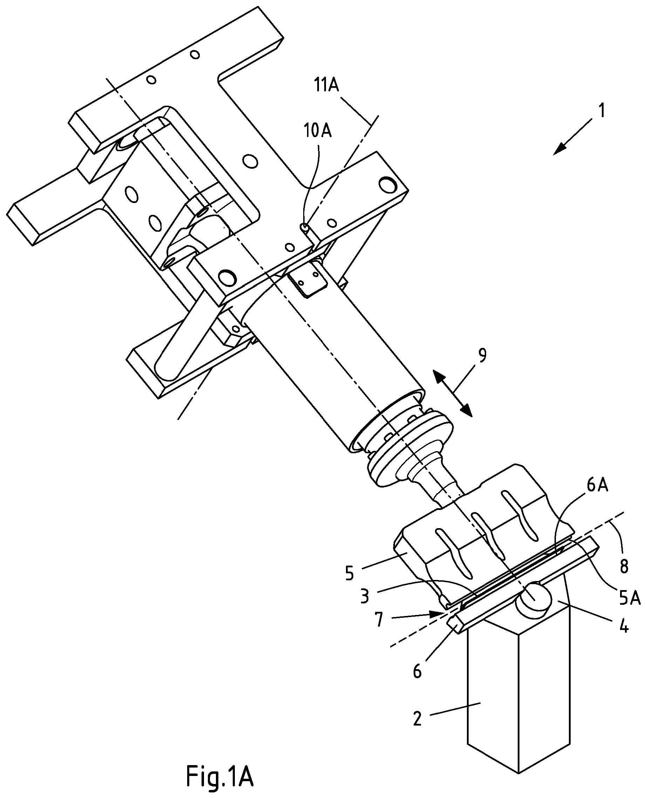

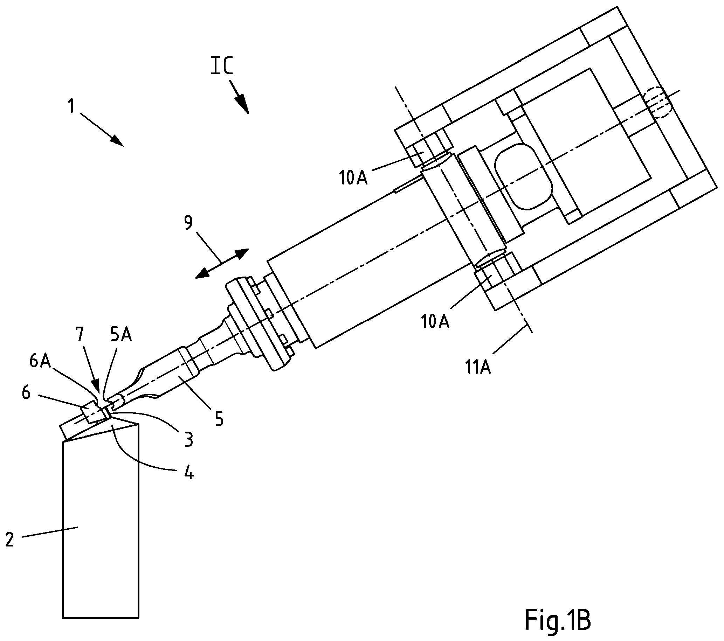

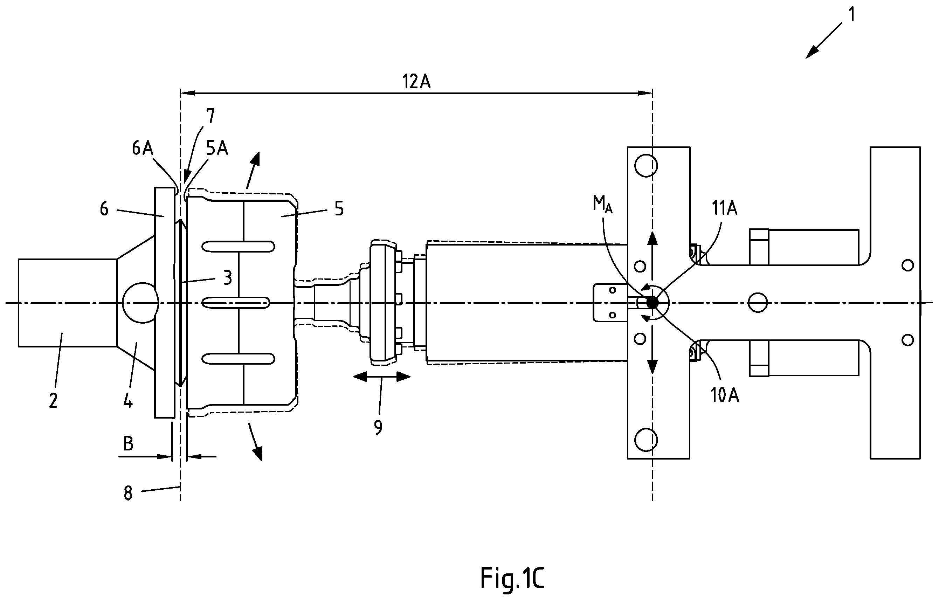

In Fig. 1A ist eine erste Ausgestaltung einer erfindungsgemäßen Vorrichtung 1 in perspektivischer Ansicht dargestellt. Fig. 1B zeigt die Vorrichtung 1 aus Fig. 1A in Seitenansicht. Fig. 1C zeigt die Vorrichtung 1 aus Fig. 1A in einer Draufsicht aus der in Fig. 1B gezeigten Blickrichtung IC. Bei der in Fig. 1A bis Fig. 1C gezeigten Vorrichtung 1 handelt es sich um eine Vorrichtung zum Ultraschallverschweißen von Verbundmaterial, insbesondere Verbundmaterial einer Verpackung 2. Insbesondere können Nahtstellen der Verpackung 2 verschweißt und damit flüssigkeitsdicht verschlossen werden, beispielsweise eine Naht 3 im Giebelbereich 4 der Verpackung 2. Die Vorrichtung 1 weist zwei Werkzeuge zur Ultraschallverschweißung auf, vorliegend eine Sonotrode 5 und einen Amboss 6. Beide Werkzeuge - also sowohl die Sonotrode 5 als auch der Amboss 6 weisen eine Funktionsfläche 5A, 6A zum Kontakt mit dem zu verschweißenden Material auf. Die Funktionsflächen 5A, 6A der Werkzeuge (Sonotrode 5, Amboss 6) sind etwa parallel zueinander ausgerichtet, so dass zwischen den Funktionsflächen 5A, 6A ein Spalt 7 mit einer etwa waagerechten Nahtrichtung 8 entsteht (die Nahtrichtung 8 ist durch eine gestrichelte Linie dargestellt). Beide Werkzeuge (Sonotrode 5, Amboss 6) sind zudem derart gelagert, dass die Breite B (vgl. Fig. 1C) des Spaltes 7 veränderbar ist, indem wenigstens eines der Werkzeuge entlang einer Vorschubrichtung 9 bewegbar ist. Die in Fig. 1A bis Fig. 1C dargestellte Vorrichtung 1 weist zudem ein Gelenk 10 mit einer Drehachse 11A auf, um die eines der Werkzeuge drehbar ist. Die Lage der Drehachse 11A ist entlang der Nahtrichtung 8 verschiebbar (in Fig. 1C durch Pfeile dargestellt), so dass die Sonotrode 5 optimal positioniert werden kann.

Das Gelenk 10 ist als Scharniergelenk 10A ausgestaltet und die Drehachse 11A verläuft durch das Scharniergelenk 10A hindurch. Dies hat zur Folge, dass das beweglich gelagerte Werkzeug - hier: die Sonotrode 5 - um das Scharniergelenk 10A und dessen Drehachse 11A herum drehbar ist und somit einen Momentanpol M_{A} aufweist, der auf der Drehachse 11A liegt. Zwischen dem Scharniergelenk 10A bzw. dessen Drehachse 11A bzw. dem Momentanpol M_{A} und dem Spalt 7 besteht ein Abstand 12A. Der Abstand 12A stellt daher einen Radius dar, um den sich die Sonotrode 5 (abschnittsweise) hin und her drehen kann (in Fig. 1C durch den gestrichelten Umriss der Sonotrode 5 angedeutet). Je größer der Abstand 12A ist, desto größer ist im Bereich der Schweißnaht der translatorische Anteil der Bewegung der Sonotrode 5, so dass bereits ein geringer Drehwinkel eine recht große Bewegung in Umfangsrichtung entlang einer Kreisbahn um den Momentanpol M_{A} zur Folge hat. Dies bedeutet, dass bereits eine geringe "Winkelkorrektur" der Sonotrode 5 während des Schweißvorgangs eine recht große Verschiebung der Sonotrode 5 in Nahtrichtung 8 zur Folge hätte. Da die zuzulassende Verschiebung entlang der Nahtrichtung 8 begrenzt ist, aber eine Winkelkorrektur der Sonotrode 5 gleichwohl erwünscht ist, wird ein möglichst geringer Abstand 12A angestrebt.

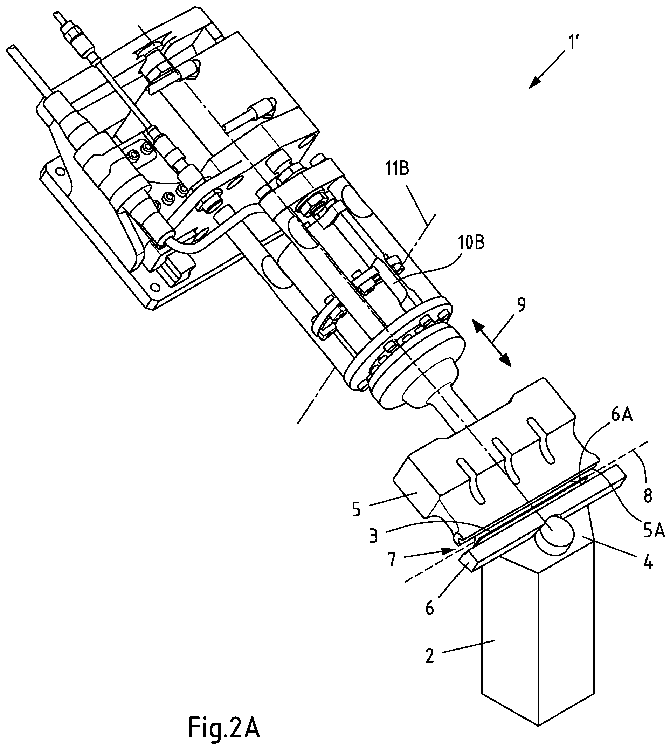

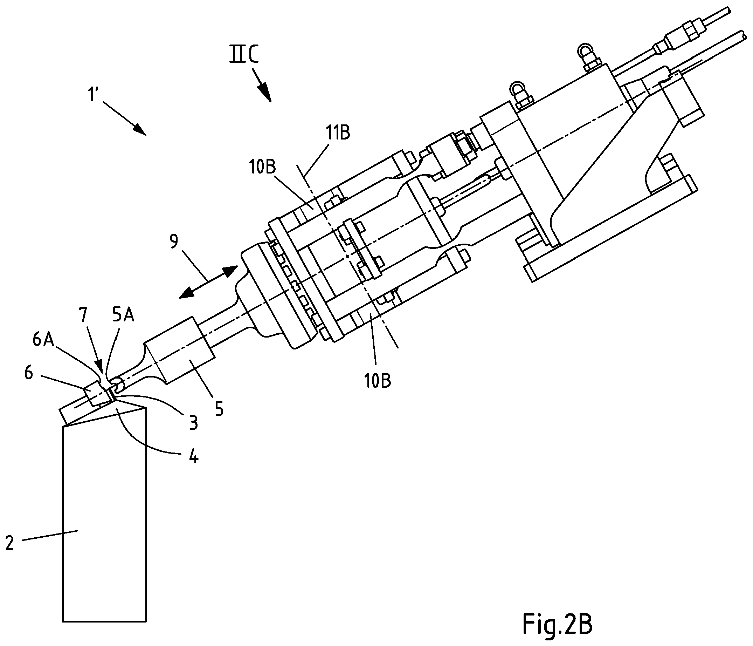

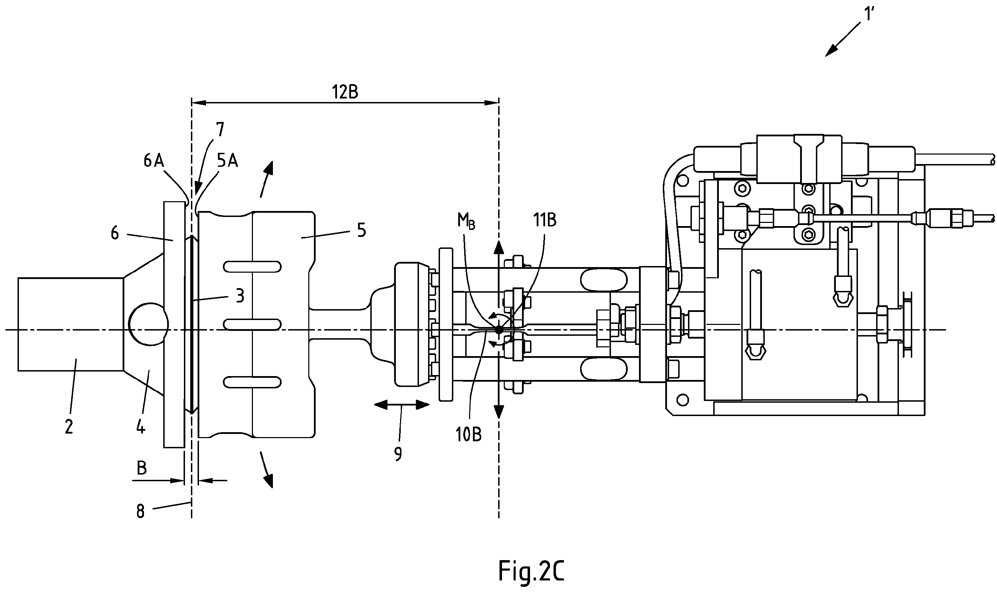

In Fig. 2A ist eine zweite Ausgestaltung einer erfindungsgemäßen Vorrichtung 1' in perspektivischer Ansicht dargestellt. Fig. 2B zeigt die Vorrichtung 1' aus Fig. 2A in Seitenansicht. Fig. 2C zeigt die Vorrichtung 1' aus Fig. 2A in einer Draufsicht aus der in Fig. 2B gezeigten Blickrichtung IIC. Für diejenigen Bereiche der Vorrichtung 1', die bereits im Zusammenhang mit Fig. 1A bis Fig. 1C beschrieben wurden, werden in Fig. 2A bis Fig. 2C entsprechende Bezugszeichen verwendet. Ein wesentlicher Unterschied zwischen der ersten Ausgestaltung der Vorrichtung 1 (Fig. 1A bis Fig. 1C) und der zweiten Ausgestaltung der Vorrichtung 1' (Fig. 2A bis Fig. 2C) liegt in der Art und der Position des Gelenks 10. Anstelle des zuvor beschriebenen Scharniergelenks 10A ist das Gelenk 10 bei der zweiten Ausgestaltung der Vorrichtung 1' als Festkörpergelenk, insbesondere als Blattfeder 10B ausgebildet. Blattfedern haben neben ihrer einfachen und robusten Bauweise den Vorteil, dass sie bei einer Auslenkung der Auslenkungsrichtung entgegengerichtete Rückstellkräfte erzeugen, die die Blattfeder wieder in die nicht ausgelenkte Ausgangsstellung zurückbewegt. Ein weiterer Unterschied liegt darin, dass die Blattfeder 10B dichter an dem Spalt 7 angeordnet ist, so dass sich ein gegenüber der ersten Ausgestaltung verringerter Abstand 12B einstellt.

Auch bei der zweiten Ausgestaltung verläuft die Drehachse 11B durch das Gelenk 10, also die Blattfeder 10B hindurch. Dies hat auch hier zur Folge, dass die Sonotrode 5 um die Blattfeder 10B und deren Drehachse 11B herum drehbar ist und die Sonotrode 5 somit einen Momentanpol M_{B} aufweist, der auf der Drehachse 11B liegt. Zwischen der Blattfeder 10B bzw. deren Drehachse 11B bzw. dem Momentanpol M_{B} und dem Spalt 7 besteht ein Abstand 12B. Der Abstand 12B stellt einen Radius dar, um den sich die Sonotrode 5 (abschnittsweise) hin und her drehen kann.

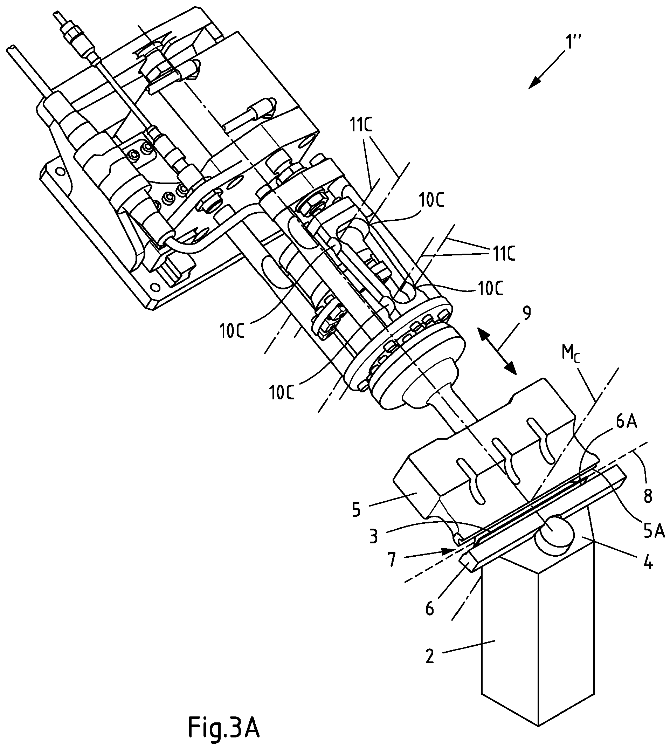

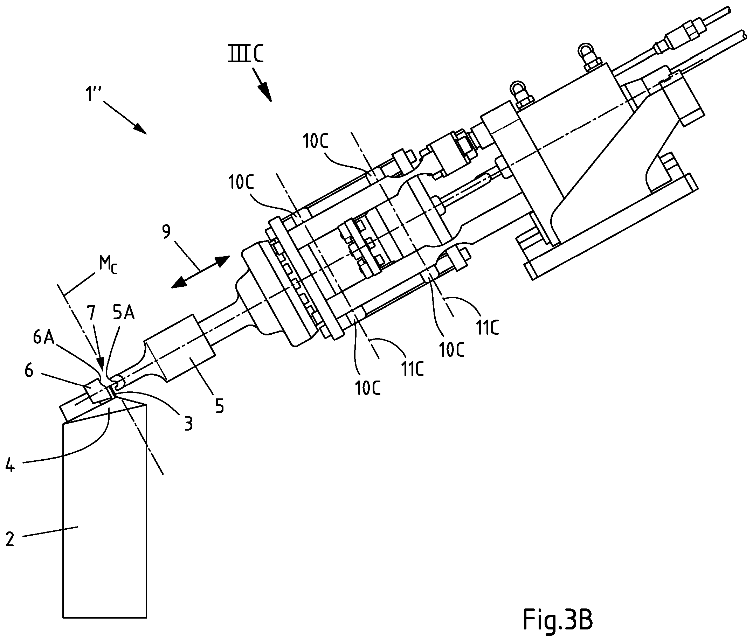

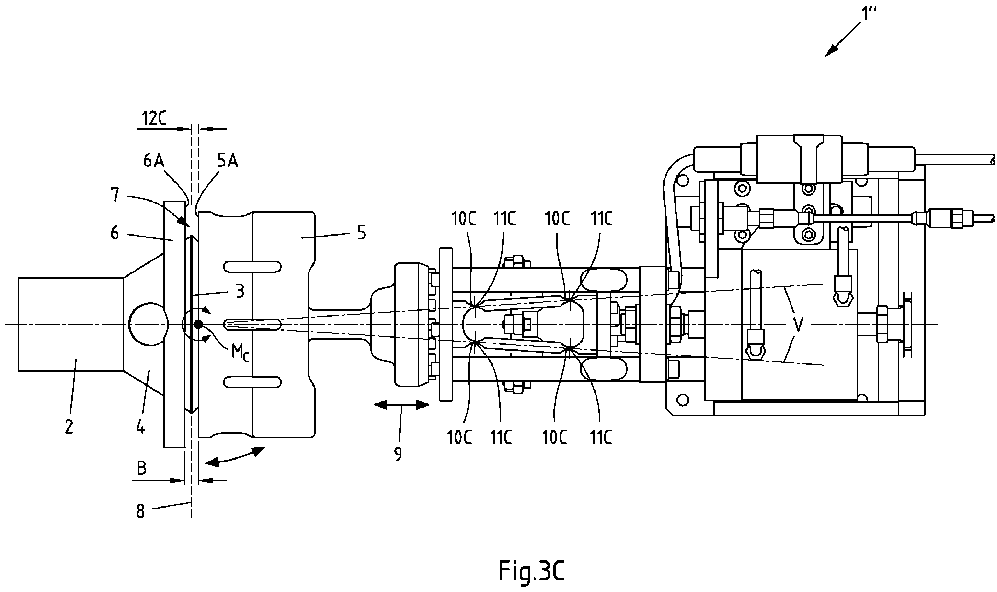

In Fig. 3A ist eine dritte Ausgestaltung einer erfindungsgemäßen Vorrichtung 1" in perspektivischer Ansicht dargestellt. Fig. 3B zeigt die Vorrichtung 1" aus Fig. 3A in Seitenansicht. Fig. 3C zeigt die Vorrichtung 1" aus Fig. 3A in einer Draufsicht aus der in Fig. 3B gezeigten Blickrichtung IIIC. Für diejenigen Bereiche der Vorrichtung 1", die bereits im Zusammenhang mit Fig. 1A bis Fig. 2C beschrieben wurden, werden in Fig. 3A bis Fig. 3C entsprechende Bezugszeichen verwendet. Ein wesentlicher Unterschied zwischen der dritten Ausgestaltung der Vorrichtung 1" (Fig. 3A bis Fig. 3C) und den beiden zuvor beschriebenen Ausgestaltungen (Fig. 1A bis Fig. 2C) liegt wiederum in der Art und der Position des Gelenks 10.

Das Gelenk 10 weist bei der dritten Ausgestaltung der Vorrichtung 1" vier Festkörpergelenke auf, die als Blattfedern 10C ausgebildet sind. Gemeinsam bilden die Blattfedern 10C ein viergliedriges Getriebe, das eine besonders vorteilhafte Bewegung der Sonotrode 5 ermöglicht. Blattfedern zeichnen sich durch eine einfache und robuste Bauweise aus und bewegen sich aus jeder ausgelenkten Stellung selbsttätig in die nicht ausgelenkte Ausgangsstellung zurück. Ein weiterer Unterschied liegt in der Lage des Momentanpols Mc der Sonotrode 5. Anders als bei den zuvor beschriebenen Ausgestaltungen liegt der Momentanpol Mc der Sonotrode 5 bei der dritten Ausgestaltung der Vorrichtung 1" nicht auf einer der Drehachsen 11C der einzelnen Blattfedern 10C, sondern wesentlich näher an dem Spalt 7, wodurch sich der Abstand 12C erheblich verringert und sogar Null sein kann (der Momentanpol Mc würde dann in dem Spalt 7 liegen). Die Lage des Momentanpols Mc kann anhand von Fig. 3C verdeutlicht werden: Der Momentanpol Mc liegt im Schnittpunkt der Verbindungsachsen V der Drehachsen 11C der einzelnen Blattfedern 10C. Durch die Lage und Ausrichtung der einzelnen Blattfedern 10C bzw. derer Drehachsen 11C kann somit die Lage des Momentanpols Mc der Sonotrode 5 gezielt beeinflusst und optimiert werden. Ein Momentanpol Mc der sehr nah an dem Spalt 7 oder sogar in dem Spalt 7 liegt hat zur Folge, dass sich die Sonotrode 5 so verhält, als ob sie an einem Drehgelenk gelagert ist, welches "in der Schweißnaht" liegt. Hierdurch wird erreicht, dass die Sonotrode 5 "um die Schweißnaht herum" rotieren kann, ohne dabei eine unerwünschte Verschiebung in Nahtrichtung auszuführen. Mit anderen Worten: im Bereich der Schweißnaht führt die Sonotrode 5 fast ausschließlich eine Rotationsbewegung aus (erwünscht für eine Winkelkorrektur); sie führt dort jedoch fast keine Translationsbewegung aus (unerwünscht wegen einer Verschlechterung des Schweißergebnisses).

### Bezugszeichenliste:

- 1, 1', 1":: Vorrichtung zum Ultraschallverschweißen
- 2:: Verpackung
- 3:: Naht
- 4:: Giebelbereich
- 5:: Sonotrode
- 5A:: Funktionsfläche (der Sonotrode 5)
- 6:: Amboss
- 6A:: Funktionsfläche (des Amboss 6)
- 7:: Spalt
- 8:: Nahtrichtung
- 9:: Vorschubrichtung
- 10:: Gelenk
- 10A:: Scharniergelenk
- 10B, 10C:: Blattfeder
- 11A, 11B, 11C:: Drehachse
- 12A, 12B, 12C:: Abstand

- B:: Breite (des Spaltes 7)
- M_{A}, M_{B}, M_{C}:: Momentanpol
- V:: Verbindungsachse

## Patentansprüche

1. Vorrichtung (1, 1', 1") zum Ultraschallverschweißen von Verbundmaterial, insbesondere Verbundmaterial von Packungsmänteln und/oder Verpackungen (2), umfassend:
- wenigstens zwei Werkzeuge (5, 6) zur Ultraschallverschweißung, insbesondere eine Sonotrode (5) und einen Amboss (6),
- wobei jedes Werkzeug (5, 6) eine Funktionsfläche (5A, 6A) zum Kontakt mit dem zu verschweißenden Material aufweist,
- wobei die Funktionsflächen (5A, 6A) der Werkzeuge (5, 6) etwa parallel zueinander ausgerichtet sind, so dass zwischen den Funktionsflächen (5A, 6A) ein Spalt (7) mit einer vorzugsweise etwa waagerechten Nahtrichtung (8) entsteht,
- wobei die Werkzeuge (5, 6) derart gelagert sind, dass die Breite (B) des Spaltes (7) veränderbar ist, indem wenigstens eines der Werkzeuge (5, 6) entlang einer Vorschubrichtung (9) bewegbar ist,
- wenigstens ein Gelenk (10A, 10B, 10C) mit wenigstens einer Drehachse (11A, 11B, 11C), um die eines der Werkzeuge (5, 6) drehbar ist, und
- wobei die Lage der Drehachse (11A, 11B, 11C) veränderbar ist,
**dadurch gekennzeichnet, dass**
die Lage der Drehachse (11A, 11B, 11C) entlang der Nahtrichtung (8) verschiebbar ist und dass die Verschiebbarkeit dadurch erreicht wird, dass das Gelenk (10A, 10B, 10C) relativ zu der übrigen Vorrichtung (1, 1', 1") verschoben werden kann und in unterschiedlichen Stellungen arretiert werden kann.

2. Vorrichtung nach Anspruch 1,
**dadurch gekennzeichnet, dass**
die Drehachse (11A, 11B, 11C) orthogonal zur Vorschubrichtung (9) und/oder orthogonal zur Nahtrichtung (8) verläuft.

3. Vorrichtung nach Anspruch 1 oder Anspruch 2,
**dadurch gekennzeichnet, dass**
der Abstand zwischen der Drehachse (11A, 11B, 11C) und dem Spalt (7) weniger als 50 cm, insbesondere weniger als 10 cm, vorzugsweise weniger als 5 cm beträgt.

4. Vorrichtung nach einem der Ansprüche 1 bis 3,
**dadurch gekennzeichnet, dass**
das Gelenk (10) ein Scharniergelenk (10A) aufweist.

5. Vorrichtung nach einem der Ansprüche 1 bis 4,
**dadurch gekennzeichnet, dass**
das Gelenk (10) ein Festkörpergelenk, insbesondere eine Blattfeder (10B, 10C) aufweist.

6. Vorrichtung nach einem der Ansprüche 1 bis 5,
**dadurch gekennzeichnet, dass**
die Gelenke (10) ein mehrgliedriges Getriebe bilden.

7. Vorrichtung nach Anspruch 6,
**dadurch gekennzeichnet, dass**
das Getriebe mehrere Festkörpergelenke, insbesondere mehrere Blattfedern (10B, 10C) aufweist.

8. Vorrichtung nach einem der Ansprüche 1 bis 7,
**dadurch gekennzeichnet, dass**
das um das Gelenk (10) drehbar gelagerte Werkzeug (5, 6) einen Momentanpol (M_{A}, M_{B}, M_{C}) aufweist, dessen Abstand (12A, 12B, 12C) zu dem Spalt (7) weniger als 10 cm, insbesondere weniger als 5 cm, vorzugsweise weniger als 1 cm beträgt.

9. Vorrichtung nach einem der Ansprüche 1 bis 8,
**dadurch gekennzeichnet, dass**
das um das Gelenk (10) drehbar gelagerte Werkzeug (5, 6) einen Momentanpol (Mc) aufweist, dessen Abstand (12C) zu dem Spalt (7) geringer ist als der Abstand zwischen der Drehachse (11C) und dem Spalt (7).

## Claims

1. Device (1, 1', 1") for ultrasonic welding of composite material, in particular composite material of package sleeves and/or packages (2), comprising:
- at least two tools (5, 6) for ultrasonic welding, in particular a sonotrode (5) and an anvil (6),
- wherein each tool (5, 6) has a functional surface (5A, 6A) for contact with the material to be welded,
- wherein the functional surfaces (5A, 6A) of the tools (5, 6) are aligned approximately parallel to one another such that a gap (7) with a preferably approximately horizontal seam direction (8) is created between the functional surfaces (5A, 6A),
- wherein the tools (5, 6) are mounted in such a way that the width (B) of the gap (7) can be changed by moving at least one of the tools (5, 6) along a feed direction (9),
- at least one joint (10A, 10B, 10C) with at least one axis of rotation (11A, 11B, 11C) about which one of the tools (5, 6) can be rotated, and
- wherein the position of the axis of rotation (11A, 11B, 11C) can be changed,
**characterised in that**
the position of the axis of rotation (11A, 11B, 11C) can be displaced along the seam direction (8) and **in that** the displaceability is achieved **in that** the joint (10A, 10B, 10C) can be displaced relative to the rest of the device (1, 1', 1") and can be locked in different positions.

2. Device according to Claim 1,
**characterised in that**
the axis of rotation (11A, 11B, 11C) runs orthogonal to the feed direction (9) and/or orthogonal to the seam direction (8).

3. Device according to Claim 1 or Claim 2,
**characterised in that**
the distance between the axis of rotation (11A, 11B, 11C) and the gap (7) is less than 50 cm, in particular less than 10 cm, preferably less than 5 cm.

4. Device according to any one of Claims 1 to 3,
**characterised in that**
the joint (10) has a hinge joint (10A).

5. Device according to any one of Claims 1 to 4,
**characterised in that**
the joint (10) has a solid-state joint, in particular a leaf spring (10B, 10C).

6. Device according to any one of Claims 1 to 5,
**characterised in that**
the joints (10) form a multi-part transmission.

7. Device according to Claim 6,
**characterised in that**
the transmission has a plurality of solid-state joints, in particular a plurality of leaf springs (10B, 10C).

8. Device according to any one of Claims 1 to 7,
**characterised in that**
the tool (5, 6) rotatably mounted around the joint (10) has an instantaneous centre of rotation (MA, MB, MC ), the distance of which (12A, 12B, 12C) from the gap (7) is less than 10 cm, in particular less than 5 cm, preferably less than 1 cm.

9. Device according to any one of Claims 1 to 8,
**characterised in that**
the tool (5, 6) rotatably mounted around the joint (10) has an instantaneous centre of rotation (MC ), the distance (12C) of which from the gap (7) is less than the distance between the axis of rotation (11C) and the gap (7).

## Revendications

1. Dispositif (1, 1', 1") de soudage par ultrasons de matériaux composites, notamment de matériaux composites d'enveloppes d'emballage et/ou d'emballages (2), comportant :
- au moins deux outils (5, 6) de soudage par ultrasons, notamment une sonotrode (5) et une enclume (6),
- chaque outil (5, 6) présentant une surface fonctionnelle (5A, 6A) en contact avec le matériau à souder,
- les surfaces fonctionnelles (5A, 6A) des outils (5, 6) étant orientées approximativement parallèlement l'une à l'autre de sorte à former entre les surfaces fonctionnelles (5A, 6A) une fente (7) avec une direction de couture (8), de préférence approximativement horizontale,
- les outils (5, 6) étant logés de manière à ce que la largeur (B) de la fente (7) soit modifiable en déplaçant au moins l'un des outils (5, 6) le long d'une direction d'avancement (9),
- au moins une articulation (10A, 10B, 10C) comportant au moins un axe de rotation (11A, 11B, 11C), autour de laquelle l'un des outils (5, 6) peut tourner, et
- dans lequel la position de l'axe de rotation (11A, 11B, 11C) est modifiable,
**caractérisé en ce que**
la position de l'axe de rotation (11A, 11B, 11C) peut être déplacée le long de la direction de couture (8) et **en ce que** le déplacement est obtenu par le fait que l'articulation (10A, 10B, 10C) peut être déplacée par rapport au reste du dispositif (1, 1', 1") et peut être verrouillée dans différentes positions.

2. Dispositif selon la revendication 1,
**caractérisé en ce que**
l'axe de rotation (11A, 11B, 11C) est orthogonal par rapport à la direction d'avancement (9) et/ou orthogonal par rapport à la direction de soudure (8).

3. Dispositif selon la revendication 1 ou la revendication 2,
**caractérisé en ce que**
la distance entre l'axe de rotation (11A, 11B, 11C) et la fente (7) est inférieure à 50 cm, notamment inférieure à 10 cm, de préférence inférieure à 5 cm.

4. Dispositif selon l'une quelconque des revendications 1 à 3,
**caractérisé en ce que**
l'articulation (10) présente une articulation à charnière (10A).

5. Dispositif selon l'une quelconquedes revendications 1 à 4,
**caractérisé en ce que**
l'articulation (10) présente une articulation à corps solide, notamment un ressort à lames (10B, 10C).

6. Dispositif selon l'une quelconque des revendications 1 à 5,
**caractérisé en ce que**
les articulations (10) forment une transmission multi-éléments.

7. Dispositif selon la revendication 6,
**caractérisé en ce que**
la transmission présente plusieurs articulations à corps solides, notamment plusieurs ressorts à lames (10B, 10C).

8. Dispositif selon l'une quelconque des revendications 1 à 7,
**caractérisé en ce que**
l'outil (5, 6), logé de façon rotative autour de l'articulation (10), présente un axe instantané de rotation (M_{A}, M_{B}, M_{c}), dont la distance (12A, 12B, 12C) par rapport à la fente (7) est inférieure à 10 cm, notamment inférieure à 5 cm, de préférence inférieure à 1 cm.

9. Dispositif selon l'une quelconque des revendications 1 à 8,
**caractérisé en ce que**
l'outil (5, 6), logé de façon rotative autour de l'articulation (10), présente un axe instantané de rotation (M_{c}), dont la distance (12C) par rapport à la fente (7) est inférieure à la distance entre l'axe de rotation (11C) et la fente (7).
